# EUROPÄISCHE PATENTSCHRIFT

(11) **EP 3 307 603 B1**
(45) Veröffentlichungstag und Bekanntmachung des Hinweises auf die Patenterteilung: **08.05.2019**
(21) Anmeldenummer: 16726874.7
(22) Anmeldetag: 03.06.2016
(51) Int. Cl.: B62D 5/00, F16D 27/108

(54) **FAHRZEUGLENKUNG MIT STEER-BY-WIRE-SYSTEM UND MECHANISCHER RÜCKFALLEBENE**
VEHICLE STEERING SYSTEM WITH STEER-BY-WIRE SYSTEM AND MECHANICAL FALLBACK SYSTEM
DIRECTION DE VÉHICULE ÉQUIPÉE D'UN SYSTÈME À DIRECTION PAR CÂBLES ET D'UN NIVEAU DE REPLI MÉCANIQUE

(30) Priorität: 10.06.2015 DE 102015007280
(43) Veröffentlichungstag der Anmeldung: 18.04.2018
(60) Teilanmeldung: 18185111.4
(73) Patentinhaber: ThyssenKrupp Presta AG, 9492 Eschen (LI); thyssenkrupp AG, 45143 Essen (DE)
(72) Erfinder: STEINKOGLER, Bernhard, 6850 Dornbirn (AT); GALEHR, Robert, 9486 Schaanwald (LI)
(74) Vertreter: thyssenkrupp Intellectual Property GmbH
(86) Internationale Anmeldenummer: PCT/EP2016/062613
(87) Internationale Veröffentlichungsnummer: WO 2016/198327

(56) Entgegenhaltungen:
- EP-A1- 2 085 292
- EP-A2- 0 447 626
- EP-A2- 1 508 493
- DE-A1- 10 046 168
- DE-A1- 10 160 717
- DE-U1- 20 305 308
- US-A- 4 984 668

## Beschreibung

Die vorliegende Erfindung betrifft eine Kraftfahrzeuglenkung mit den Merkmalen des Oberbegriffs des Anspruchs 1.

Steer-by-Wire-Lenkungen sind Lenkungen, bei denen im Betrieb die bei konventionellen Fahrzeuglenkungen vorgeschriebene mechanische Zwangskopplung zwischen dem Lenkrad und dem Lenkgetriebe aufgehoben ist. Die vom Fahrer in das Lenkrad eingeleitete Lenkbewegung wird dann von einem Sensor erfasst, von einer Steuerung verarbeitet und von einem Stellantrieb in Abhängigkeit von der Steuerung in einem Lenkwinkel eines gelenkten Rades umgesetzt. Auf der Fahrerseite wird mittels eines Handmomentenstellers noch ein Handmoment auf das Lenkrad aufgeprägt, um die für ein sicheres Fahren erforderlichen Betätigungskräfte und Reaktionskräfte zu simulieren.

Mit solchen Lenkungen ist es möglich, zum Beispiel automatische Seitenwindkorrekturen, Gegenlenken und andere Lenkvorgänge auszuführen, ohne dass das Lenkrad dabei diesen Lenkbewegungen folgen muss. Es können auch Vorgänge des autonomen Fahrens ausgeführt werden, ohne dass das Lenkrad sich dabei mit dreht.

Die Anforderungen an die Ausfallsicherheit eines solchen Lenksystems sind besonders hoch. So muss in jedem möglichen Störfall die Lenkbarkeit des Fahrzeugs sichergestellt sein. Dafür sind Redundanzen und Rückfallebenen vorgesehen, beispielsweise bei Systemen mit elektromechanischem Stellantrieb und elektromechanischem Handmomentensteller. Bei diesen Systemen wird die Lenkwelle zwischen den beiden Antrieben mittels einer mechanischen Kupplung aufgetrennt, um im Betrieb die Steer-by-Wire-Funktion zu ermöglichen. Im Störfall wird die Kupplung geschlossen, um eine mechanische Zwangskopplung zwischen Lenkrad und Lenkgetriebe herzustellen, wodurch die Lenkung dann ähnlich einer konventionellen Lenkung betätigbar bleibt und das Fahrzeug zumindest sicher zum Stillstand gebracht werden kann.

Eine gattungsgemäße elektromechanische Steer-by-Wire-Lenkung ist aus dem Dokument WO2014/038452A1 bekannt. Dabei ist der Handmomentensteller in der Nähe des Lenkrades an der Lenksäule angeordnet. Die Lenksäule ist über eine Lenkwelle mit einem Lenkgetriebe gekoppelt, an welchem auch der elektromechanische Stellantrieb wie bei einer elektromechanischen Servolenkung angeordnet ist. Die Lenkwelle ist mittels einer zwischen einem oberen Teil und einem unteren Teil angeordneten Kupplung selektiv auftrennbar oder verbindbar. Der aufgetrennte Zustand mit geöffneter Kupplung ist dabei der Betriebszustand, während der verbundene Zustand bei geschlossener Kupplung die mechanische Rückfallebene darstellt.

Die Anordnung ist bei der Fertigung und Montage aufwändig, weil die Lenksäule mit dem Handmomentensteller, das Lenkgetriebe mit dem Stellantrieb und die Lenkwelle mit der Kupplung separate Baugruppen sind, die gefertigt und montiert werden müssen und die vor allem im Betrieb über elektrische Leitungen derart miteinander verbunden sein müssen, dass eine besonders hohe Stör- und Ausfallsicherheit erzielt wird. Für den Einsatz solcher Lenkungen in leichten und preiswerten Fahrzeugen, beispielsweise in Klein- und Kompaktfahrzeugen, erscheint eine solche Lenkung zu aufwändig.

Aus der EP 0 447 626 A2 ist eine Kraftfahrzeuglenkung gemäß dem Oberbegriff des Anspruchs 1 bekannt, bei welcher der Stellantrieb an der Lenksäule angeordnet ist. Diese ist aufwendig bezüglich Herstellung und Montage.

Es ist deshalb Aufgabe der vorliegenden Erfindung, eine Steer-by-Wire-Lenkung zu schaffen, die bei der Herstellung und der Montage weniger aufwändig ist.

Diese Aufgabe wird von einer Kraftfahrzeuglenkung mit den Merkmalen des Anspruchs 1 gelöst. Vorteilhafte Ausführungsformen ergeben sich aus den Merkmalen der abhängigen Ansprüche.

Erfindungsgemäß ist die Kraftfahrzeuglenkung so ausgeführt, dass der Handmomentensteller einen Elektromotor mit einer Abtriebswelle und ein mit der Abtriebswelle in Eingriff stehendes oberes Abtriebsrad aufweist, welches mit der oberen Lenkwelle drehfest verbunden ist, und dass der Stellantrieb einen Elektromotor mit einer Abtriebswelle und ein mit der Abtriebswelle in Eingriff stehendes unteres Abtriebsrad aufweist, welches mit der unteren Lenkwelle drehfest verbunden ist. Dadurch wird der Aufbau der gesamten Anordnung vereinfacht.

Weil bei einer Kraftfahrzeuglenkung mit Steer-by-Wire-Funktion mit einer oberen Lenkwelle, die in einer Lenksäule gelagert mit einem Lenkrad drehfest verbindbar ist, mit einer unteren Lenkwelle, die mit einem Lenkgetriebe zur Verschwenkung wenigstens eines lenkbaren Rades verbunden ist, sowie mit einem mit der oberen Lenkwelle verbundenen Handmomentensteller, mit einem mit der unteren Lenkwelle verbundenen Stellantrieb und mit einer Kupplung, die in geschlossenem Zustand das Lenkrad und das Lenkgetriebe drehfest miteinander koppelt, weiter vorgesehen ist, dass der Stellantrieb an der Lenksäule angeordnet ist, können die Lenksäule, die Kupplung, der Handmomentensteller und der Stellantrieb als eine gemeinsame Baugruppe hergestellt, geliefert und montiert werden. Die fahrzeugseitige Steuerung muss dann nur mit dieser Baugruppe verbunden werden, so dass zu erwarten ist, dass diese Verbindung besonders betriebssicher ist. Die Kraftfahrzeuglenkung wird dadurch auch einfacher montierbar. Lagerhaltung und Montage werden weniger aufwändig.

Wenn der Stellantrieb einen Elektromotor aufweist, der seitlich an der Lenksäule angeordnet ist, kann dieser Antriebsmotor einfacher gekühlt werden. Die Herstellung verschiedener Varianten mit unterschiedlicher elektrischer Leistung wird dadurch vereinfacht. Bevorzugt ist der Elektromotor als Synchronmotor ausgebildet.

Vorteilhaft ist die untere Lenkwelle antriebsmäßig zwischen dem Stellantrieb und dem Lenkgetriebe angeordnet. Bevorzugt ist das Lenkgetriebe als ein mechanisches Ritzel-Zahnstangen-Lenkgetriebe ausgebildet. Außerdem ist es von Vorteil, wenn der Handmomentensteller und der Stellantrieb in einem gemeinsamen Getriebegehäuse angeordnet sind, weil dann nur ein solches Gehäuse gefertigt werden muss. In einer vorteilhaften Weiterbildung ist das Getriebegehäuse aus einem Kunststoff ausgebildet. Somit lässt sich die Masse der Baugruppe gegenüber einem metallischen Gehäuse wie einer Aluminium- oder Magnesiumlegierung reduzieren.

Wenn das obere Abtriebsrad und das untere Abtriebsrad mit ihren Drehachsen koaxial zueinander angeordnet sind, wird die Anordnung in einem gemeinsamen Gehäuse weiter vereinfacht.

Eine besonders kompakte Anordnung ergibt sich, wenn die Kupplung im Kraftfluss zwischen dem oberen Abtriebsrad und dem unteren Abtriebsrad angeordnet ist.

Die Kupplung ist als Rückfallebene besonders sicher auch bei vollständigem Ausfall der Stromversorgung, wenn die Kupplung eine elektromagnetisch betätigbare Rastkupplung ist, die im stromlosen Zustand geschlossen ist.

Insbesondere kann die Kupplung einen Elektromagneten und einen mit einem Abtriebsrad drehfest verbundenen Anker aufweist, wobei der Anker mittels einer Federelements von dem Elektromagneten weg in die geschlossene Stellung der Kupplung vorgespannt ist, und dass der Anker mit wenigstens einem Raststift wirkverbunden ist, der in der geschlossenen Stellung mit einem mit dem anderen Abtriebsrad drehfest verbundenen Rastelement formschlüssig in Eingriff steht.

Eine besonders zuverlässige und im Betrieb geräuscharme Ausführung ergibt sich, wenn die Abtriebswellen als Schneckenwellen und die Abtriebsräder als Schneckenräder ausgebildet sind. Bevorzugt ist das jeweilige Schneckenrad zumindest teilweise aus einem Kunststoff beschaffen, besonders bevorzugt ist die Verzahnung des jeweiligen Schneckenrads zumindest teilweise aus einem Kunststoff beschaffen. Dadurch kann die Laufruhe der jeweiligen Getriebeeinheit erhöht werden und die Masse der Baugruppe gegenüber einer konventionellen rein metallischen Ausführung reduziert werden.

Vorgeschlagen wird, dass die Kupplung ein um eine Rotationsachse drehbares erstes Kupplungsteil umfasst, und ein um die Rotationsachse drehbares zweites Kupplungsteil, sowie zumindest zwei Raststifte, die in dem zweiten Kupplungsteil aufgenommen sind und gegenüber diesem in Richtung der Rotationsachse verlagerbar sind und zumindest zwei Rastelement, die in dem ersten Kupplungsteil ausgebildet sind, wobei zumindest einer der Raststifte und eines der Rastelemente in einem geschlossenen Zustand miteinander in Eingriff stehen, wodurch das erste Kupplungsteil und das zweite Kupplungsteil drehfest miteinander gekoppelt sind, sowie einen Elektromagneten, umfassend einen Anker und einen Stator, wobei der Anker mit den Raststiften wirkverbunden ist, und der Anker mittels des schaltbaren Stators in Richtung der Rotationsachse unter Mitnahme der Raststifte gegen die Vorspannung eines Federelements bewegbar ist, wodurch das Federelement die Raststifte in Richtung des geschlossenen Zustandes vorspannt. Erfindungsgemäß sind die Rastelemente als bogenförmige Langlöcher oder Langnuten ausgebildet.

In einem geöffneten Zustand stehen alle Raststifte außer Eingriff mit den Rastelementen, wodurch das erste Kupplungsteil und das zweite Kupplungsteil zueinander um die Rotationsachse verdrehbar sind.

Durch die Bestromung des Stators wird der Anker bewegt, wodurch alle Raststifte außer Eingriff gebracht werden und das Federelement die Raststifte in Richtung des geschlossenen Zustands vorspannt. Im Fall einer Unterbrechung der Bestromung des Stators, so dass der Anker nicht mehr durch die magnetischen Kräfte in Position gehalten wird, erfolgt mittels des Federelements eine Bewegung der Raststifte in Richtung des Eingriffs mit den Rastelementen. Dabei kann ein Zustand eintreten, dass noch keiner der Raststifte in Eingriff mit den Rastelementen gelangt ist, jedoch befinden sich alle Raststifte in einer Vorhaltestellung, so dass nach einer geringen relativen Verdrehung zwischen dem ersten und dem zweiten Kupplungsteil zunächst ein Eingriff zumindest eines der Raststifte in zumindest eines der Rastelemente erfolgt. Nach einer weiteren geringen relativen Verdrehung erfolgt das Eingreifen zumindest eines weiteren Raststiftes in zumindest eines der Rastelement. Dies erfolgt auch bei einer Drehrichtungsumkehr zwischen dem Eingreifen des ersten und des weiteren Raststifts. Durch die erfindungsgemäße Ausbildung der Rastelemente als bogenförmige Langlöcher oder Langnuten kann nach einer geringen Verdrehung bereits ein Eingriff der Raststifte erfolgen. Im Gegensatz zur Ausbildung der Rastelemente als kreiszylindrischen Bohrungen kann das Eingriffsverhalten verbessert werden, da kein genaues Treffen oder eine langsame Verdrehung des ersten gegenüber dem zweiten Kupplungsteils bis zum Eingriff der Raststifte mehr erforderlich ist, mit anderen Worten kann somit das sichere Eingreifen bei hohen Winkelgeschwindigkeiten zwischen dem ersten und dem zweiten Kupplungsteilen gewährleitstet werden.

Durch diese erfindungsgemäße Kupplung kann ein besonders schnelle Überführung aus dem geöffneten Zustand in den geschlossenen Zustands erreicht werden, so dass eine schnelle und sichere Bereitstellung eines Kraftflusses zwischen Lenkrad und Lenkgetriebe gewährleistet ist, wobei das erste oder das zweite Kupplungsteil mit dem Lenkrad wirkverbunden ist und das andere des ersten oder zweiten Kupplungsteils mit einer Eingangswelle des Lenkgetriebes wirkverbunden ist. Dadurch kann die Sicherheit der Kraftfahrzeuglenkung, bei dem im Normalbetrieb das Lenkrad und das Lenkgetriebe voneinander entkoppelt sind, weiter erhöht werden, da im Notfall in kürzester Zeit ein mechanischer Durchgriff vom Lenkrad auf das Lenkgetriebe bereitgestellt werden kann.

Die bogenförmigen Langlöcher oder die bogenförmigen Langnuten sind in Umfangsrichtung auf einem gleichbleibenden Radius bezogen auf die Rotationsachse angeordnet, so dass die Raststifte mit dem Langloch oder der Langnut in Eingriff gelangen können. Mit anderen Worten sind die Raststifte von der Rotationsachse radial beabstandet und die Langlöcher oder Langnuten weisen einen identischen radialen Abstand zur Rotationsachse auf, so dass die Raststifte mit den Langlöchern oder Langnuten in Eingriff gelangen können.

In einer vorteilhaften Weiterbildung sind zumindest zwei Raststifte in Eingriff mit einem oder zwei der Rastelemente, wobei der eine Raststift die Rotation zwischen dem ersten und dem zweiten Kupplungsteil in eine erste Drehrichtung überträgt und der zweite Raststift die Rotation in eine der ersten Drehrichtung entgegengesetzten Drehrichtung überträgt.

Dadurch das jeder der Raststifte lediglich die Rotation zwischen dem ersten und dem zweite Kupplungsteil in einer Drehrichtung überträgt, kann ein geringes Drehspiel bei der Änderung der Drehrichtung realisiert werden, da jeder der Raststifte unter sehr geringen Spiel, welches erforderlich ist um die Raststifte wieder außer Eingriff zu bringen, in quasi direkten formschlüssigen Kontakt mit einer Flanke des Rastelements steht.

In einer vorteilhaften Weiterbildung weist die Kupplung zumindest drei Raststifte auf, wobei im geschlossenen Zustand zumindest einer der drei Raststifte nicht mit einem der Rastelemente im Eingriff steht. Dieser wenigstens eine nicht in Eingriff stehende Raststift befindet sich in einer Vorhaltestellung, in der dieser Raststift mittels des Federelements vorgespannt ist.

In einer weiteren vorteilhaften Weiterbildung ist das erste oder zweite Kupplungsteil mit dem Handmomentensteller über eine erste Welle drehfest gekoppelt und das andere des ersten oder zweiten Kupplungsteils ist mit einer zweiten Welle gekoppelt, die die mit einer Zahnstange eines Lenkgetriebes wirkverbunden ist.

Dadurch bietet sich der Vorteil, dass die erfindungsgemäße Kupplung an einer beliebigen Position zwischen dem Handmomentensteller und dem Lenkgetriebe angeordnet werden kann. Somit kann eine optimale Anpassung an den vorhandenen Bauraum gewährleistet werden.

In einer vorteilshaften Weiterbildung ist das Federelement als Tellerfeder ausgebildet. Bevorzugt weist die Tellerfeder sich radial nach außen erstreckende blattfederartige Federzungen auf.

Somit bietet sich der Vorteil, dass jeder Raststift mit einer Federzunge in Eingriffsrichtung vorspannbar ist. Bevorzugt umfasst die Tellerfeder ein Federstahlblech oder einen Kunststoff.

Nachfolgend wird eine Ausführungsform der vorliegenden Erfindung anhand der Zeichnung genauer beschrieben. Gleiche Bauelemente tragen gleiche Bezugsziffern. Es zeigen:
- Fig. 1:: eine Kraftfahrzeuglenkung mit Steer-by-Wire-Funktionalität mit einem an der Lenksäule angeordneten Stellantrieb;
- Fig. 2:: die Lenksäule aus Figur 1 in einer anderen perspektivischen Darstellung;
- Fig. 3:: die Lenksäule aus Figur 2 in einer Draufsicht;
- Fig. 4:: die Lenksäule aus Figur 2 in einer Seitenansicht;
- Fig. 5:: einen Längsschnitt durch das Getriebe der Lenksäule mit geöffneter Kupplung;
- Fig. 6:: eine schematische Darstellung des Momentenflusses in einer Lenkung mit geöffneter Kupplung;
- Fig. 7:: eine Darstellung entsprechend Figur 5 mit geschlossener Kupplung;
- Fig. 8:: eine Darstellung entsprechend Figur 6 mit geschlossener Kupplung;
- Fig. 9:: eine perspektivische Schnittdarstellung der Kupplung im geöffneten Zustand;
- Fig. 10:: eine perspektivische Schnittdarstellung der Kupplung im geschlossenen Zustand; sowie
- Figur 11:: eine Kraftfahrzeuglenkung mit Steer-by-Wire-Funktionalität mit einem an der Lenksäule angeordneten Stellantrieb in einer zweiten Anordnungsvariante.

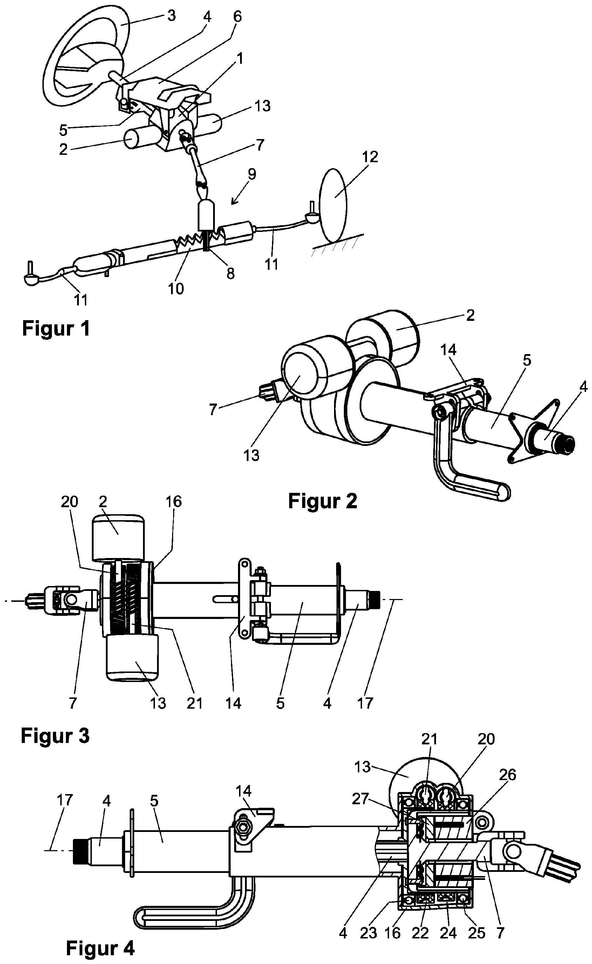

In Figur 1 ist eine Kraftfahrzeuglenkung mit Steer-by-Wire-Funktionalität mit einem an einer Lenksäule 1 angeordneten Stellantrieb 2 dargestellt. Die Lenkung umfasst in an sich bekannter Weise ein Lenkrad 3, das drehfest mit einer oberen Lenkwelle 4 verbunden ist. Die obere Lenkwelle 4 ist in einem Mantelrohr 5 gelagert, welches wiederum und schwenkbar an einer Konsole 6 gehalten. Die Konsole 6 ist zur Befestigung an der Karosserie eines Kraftfahrzeugs eingerichtet. Eine untere Lenkwelle 7 ist drehfest mit einem Ritzel 8 eines Lenkgetriebes 9 verbunden. Das Ritzel 8 kämmt mit einer Zahnstange 10, die über Spurstangen 11 mit den lenkbaren Rädern 12 (hier ist nur eines dargestellt) verbunden ist. Da es sich bei dem dargestellten Lenksystem und um eine Steer-by-Wire-Lenkung handelt, ist außerdem ein Handmomentensteller 13 vorgesehen, der wie der Stellantrieb 2 an der Lenksäule angeordnet ist.

Die Figur 2 zeigt die Lenksäule des Lenksystems aus Figur 1 in einer anderen perspektivischen Darstellung. Die obere Lenkwelle 4 ist drehbar in dem Mantelrohr 5 gelagert, welches mit einem Klemmmechanismus 14 versehen ist, um das Lösen und Verriegeln für die vertikale und axiale Verstellbarkeit zu ermöglichen.

Das Mantelrohr 5 ist mit einem Getriebegehäuse 16 verbunden, welches den Stellantrieb 2 und den Handmomentensteller 13 trägt. Das Getriebegehäuse 16 ist etwa zylindrisch ausgebildet und trägt mittig an seiner einen Stirnseite das Mantelrohr 5, durch dessen Innenraum die obere Lenkwelle 4 in der Getriebegehäuse 16 geführt ist. An der anderen, in Fig. 2 nach hinten weisenden Stirnseite, tritt ebenfalls mittig die untere Lenkwelle 7 aus dem Getriebegehäuse 16 aus. Der Stellantrieb 2 und der Handmomentensteller 13 sind umfangsseitig an dem Getriebegehäuse 16 angeordnet.

Die Figur 3 zeigt die Lenksäule aus Figur 2 in einer Draufsicht. Bezüglich einer Längsachse 17, die der Drehachse der oberen Lenkwelle 4 entspricht, sind der Handmomentensteller 13 und der Stellantrieb 2 in Axialrichtung der Längsachse 17 gegeneinander versetzt angeordnet, wobei der Handmomentensteller 13 näher an der oberen Lenkwelle 4 liegt. Das Getriebegehäuse 16 ist in dieser Darstellung geöffnet, so dass eine Schneckenwelle 20 als Abtriebswelle des Elektromotors des Stellantriebs 2 und eine etwa parallel dazu angeordnete Schneckenwelle 21 als Abtriebswelle des Elektromotors des Handmomentenstellers 13 sichtbar sind.

In der Figur 4 ist die Lenksäule aus Figur 2 in einer Seitenansicht abgebildet, wobei der Bereich des Getriebegehäuses 16 in einem Längsschnitt dargestellt ist. Die obere Lenkwelle 4 ist an ihrem in dem Getriebegehäuse 16 angeordneten Ende mit einem topfförmigen Abtriebsrad 22 verbunden, welches mittels eines Wälzlagers 23 um die Achse 17 drehbar in dem Getriebegehäuse 16 gelagert ist. Das Abtriebsrad 22 weist an seinem äußeren Umfang eine Verzahnung auf, die kompatibel zu der Verzahnung der Abtriebswelle 21 des Handmomentenstellers 13 ist. Ein zweites topfförmiges Abtriebsrad 24 ist ebenfalls in einem Wälzlager 25 drehbar innerhalb des Getriebegehäuses 16 gelagert und steht mit der unteren Lenkwelle 7 drehfest in Verbindung. Eine äußere Umfangsverzahnung des Abtriebsrades 24 ist kompatibel zu der Verzahnung der Abtriebswelle 20 des Stellantriebs 2 ausgebildet. Eine elektromagnetische Kupplung 100 mit einem Stator 26 und einem Anker 27 ist innerhalb des Abtriebsrades 24 angeordnet. Die Abtriebsräder 22 und 24 sind koaxial zu der Achse 17 angeordnet.

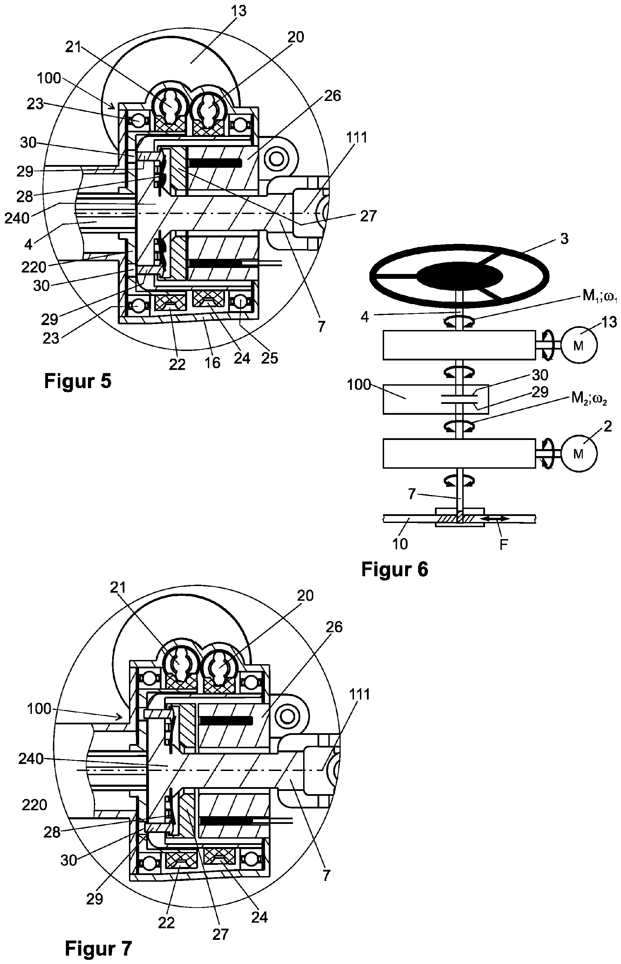

Die Figur 5 zeigt einen Längsschnitt durch das insoweit beschriebene Getriebe der Lenksäule mit geöffneter Kupplung 100 in einer detaillierteren Darstellung. Der Stator 26 ist als Elektromagnet ausgebildet und umgibt konzentrisch die untere Lenkwelle 7, wobei die Lenkwelle 7 einstückig mit dem zweiten Kupplungsteil 240 ausgebildet ist. Es ist ebenfalls denkbar und möglich, die untere Lenkwelle 7 mittels einer Welle-Nabe-Verbindung mit dem zweiten Kupplungsteil 240 drehfest zu verbinden. Solche Welle-Nabe-Verbindungen sind hinreichend aus dem Stand der Technik bekannt. Der Stator 26 kann fest an dem Getriebegehäuse 16 angebracht sein. Es ist nicht erforderlich, dass er sich mit der unteren Lenkwelle 7 dreht. Der Anker 27 ist jedoch drehfest, aber axial verlagerbar mit dem zweiten Kupplungsteils 240 und mit der unteren Lenkwelle 7 verbunden. Der Anker 27 ist von einer Tellerfeder 28 in die von dem Stator weg weisende Richtung vorgespannt, wobei der Anker 27 eine Anzahl von Raststiften 29, die axial verlagerbar in die als bogenförmige Langlöcher (im Weiteren gleichbedeutend mit Langlöcher) ausgeführten Rastelemente 30 des Abtriebsrades 24 sitzen, trägt. Ein erstes Kupplungsteil, welches mit dem Abtriebsrad 22 drehfest verbunden ist, weist eine Anzahl von zur Achse 17 parallele Rastelemente 30 auf, in die die Raststifte 29 zur Kopplung des Abtriebsrades 22 mit dem Abtriebsrad 24 in Eingriff gebracht werden können.

Das erste Kupplungsteil 220 ist in dieser Ausführungsvariante als Teil des Abtriebsrads 22 und das zweite Kupplungsteil 240 ist in dieser Ausführungsvariante als Teil des Abtriebsrad 24 ausgebildet.

Wenn der Stator 26 mit Strom beaufschlagt ist, zieht das Magnetfeld den Anker 27 gegen die Kraft des als Tellerfeder ausgebildeten Federelements 28 an den Stator 26 heran, so dass der Anker 27 die Raststifte 29 von dem Abtriebsrad 22 weg und aus den als bogenförmiges Langloch ausgebildeten Rastelementen 30 heraus zieht. Das Abtriebsrad 22 und das Abtriebsrad 24 bzw. das erste Kupplungsteil 220 und das erste Kupplungsteil 240 sind dann entkoppelt. Zwischen dem Stator 26 und dem Anker 27 ist im Strom beaufschlagten Zustand ein minimaler Luftspalt vorhanden, so dass Stator 26 und Anker 27 sich nicht berühren.

Die Figur 6 zeigt eine schematische Darstellung des Momentenflusses in einer Lenkung mit geöffneter Kupplung 100 wie in Figur 5 dargestellt. Der Fahrer erzeugt an dem Lenkrad als Steuersignal einen Drehwinkel mit einer ersten Winkelgeschwindigkeit. Der Handmomentensteller 13 erzeugt daraufhin ein Handmoment, das der Fahrer bei der Betätigung des Lenkrades wahrnimmt. Die geöffnete Kupplung 100 trennt die obere und die untere Lenkwelle. Der Stellantrieb 2 prägt in Abhängigkeit von einer nicht dargestellten Steuerung ein Drehmoment und einen Drehwinkel mit einer zweiten Winkelgeschwindigkeit auf die untere Lenkwelle 7 auf, was zu einer entsprechenden Kraft an der Zahnstange 10 führt. Die Lenkung arbeitet als Steer-by-Wire-Lenkung.

Figur 7 zeigt eine Darstellung entsprechend Figur 5, jedoch mit geschlossener Kupplung 100. Einige Bezugsziffern wurden wegen der besseren Übersichtlichkeit weggelassen. Im Fehlerfall wird der Stator 26 stromlos gemacht und der Anker 27 folglich aufgrund der Rückstellkraft des Federelements 28 von dem Stator 26 weg in die in Fig. 7 dargestellte Position gedrängt. Die Raststifte 29 bewegen sich mit dem Anker 27 und rasten in die als Langloch ausgebildeten Rastelemente 30 ein. Dabei sind die Rastelemente 30 und Raststifte 29 so zueinander ausgebildet und angeordnet, dass zumindest ein Raststift 29 die Rotation lediglich in eine erste Drehrichtung (Uhrzeigersinn) und zumindest ein zweiter Raststift die Rotation lediglich in eine zweite Drehrichtung (Gegenuhrzeigersinn) überträgt. Dadurch kann eine Reduktion des Spiels bei einem Drehrichtungswechsel realisiert werden, da es nicht erforderlich ist, dass sich ein Raststift von einer Anlagefläche zur gegenüberliegenden Anlagefläche des Rastelements bewegt, da an dieser gegenüberliegenden Anlagefläche bereits ein Raststift anliegt. Das Abtriebsrad 22 und das Abtriebsrad 24 sind dadurch drehfest miteinander gekoppelt, ebenso die obere Lenkwelle 4 und die untere Lenkwelle 7. Es ist eine Zwangskopplung zwischen dem Lenkrad und dem Lenkgetriebe hergestellt.

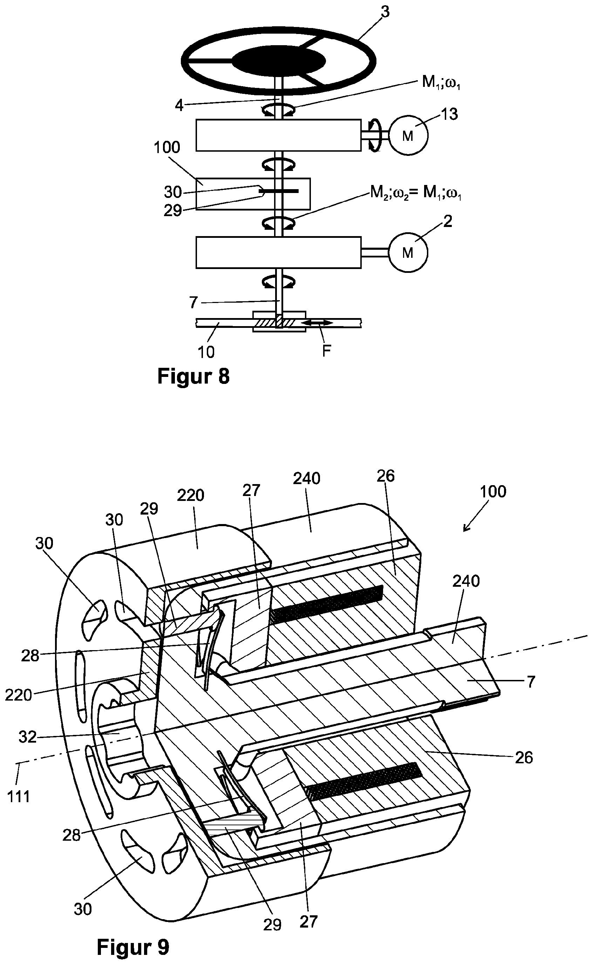

Figur 8 zeigt eine Darstellung entsprechend Figur 6 mit geschlossener Kupplung 100. Drehwinkel, Winkelgeschwindigkeit und Drehmomente in der oberen Lenkwelle 4 und der unteren Lenkwelle 7 sind identisch. Die Lenkung arbeitet wie eine konventionelle Lenkung mit drehfestem Durchgriff vom Lenkrad auf das Lenkgetriebe.

Figur 9 zeigt eine schematische perspektivische Schnittdarstellung der Kupplung. Zur Übersichtlichkeit sind in dieser Figur 9 Komponenten, wie beispielsweise die Lager 23, 25, nicht dargestellt. Die Kupplung 100 befindet sich in einem geöffneten Zustand oder mit anderen Worten im ausgekuppelten oder entsperrten Zustand. Der erste Kupplungsteil 220 und der zweiten Kupplungsteil 240 könnten sich somit relativ zueinander verdrehen. Die als Langlöcher ausgebildeten Rastelemente 30 des ersten Kupplungsteils 220 stehen nicht mit den Raststiften 29 in Eingriff, die in einem jeweiligen Durchbruch, auch Bohrung genannt, des zweiten Kupplungsteil 240 aufgenommen sind und durch das Federelement 28 in Richtung des geschlossenen Zustandes vorgespannt sind. Der Anker 27 ist an den bestromten Stator 26 unter Vorspannung des Federelements heran gezogen, wobei sich die Köpfe der Raststifte 29 an krallenartig radial nach innen gerichteten Vorsprüngen abstützen und in Position gehalten werden. Mit anderen Worten ist der Anker 27 mit den Raststiften 29 wirkverbunden. Das zweite Kupplungsteil 240 umfasst einen untere Lenkwelle 7, welche mit dem Lenkgetriebe 9 wirkverbunden ist. Das erste Kupplungsteil 220 weist einen Anschluss 32 für die nicht dargestellte obere Lenkwelle 4 auf. Selbstverständlich ist es denkbar und möglich, die Kupplung so anzuordnen, dass das erste Kupplungsteil mit dem Lenkgetriebe 9 wirkverbunden ist und das zweite Kupplungsteil mit der oberen Lenkwelle bzw. dem Lenkrad 3 wirkverbunden ist.

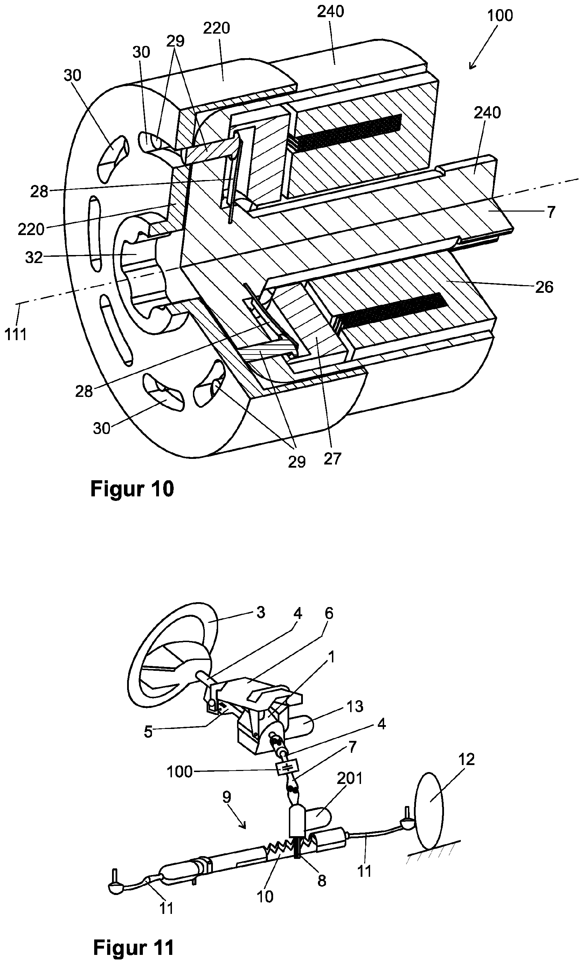

Figur 10 zeigt eine schematische perspektivische Schnittdarstellung der Kupplung 100. Wieder sind zur Übersichtlichkeit in dieser Figur 10 Komponenten, wie beispielsweise die Lager 23, 25, nicht dargestellt. Die Kupplung 100 befindet sich in einem geschlossenen Zustand oder mit anderen Worten im eingekuppelten oder gesperrten Zustand. Das erste Kupplungsteil 220 und das zweiten Kupplungsteil 240 sind relativ zueinander unverdrehbar, da die als Langlöcher ausgebildeten Rastelemente 30 des ersten Kupplungsteils 220 mit den Raststiften 29, welche im zweiten Kupplungsteil 240 in Richtung der Rotationsachse 111 verschiebbar aufgenommenen sind, in Eingriff stehen. Mit dem Entfall der Bestromung des Stators 26 wurden die durch das Federelement 28 vorgespannten Raststifte 29 und der Anker 27 in Richtung weg von dem Stator 26 axial verschoben und einige Raststifte 29 konnten spätestens nach einer geringen Verdrehung des ersten Kupplungsteil 220 relativ zum zweiten Kupplungsteils 240 in Eingriff mit den als Langlöcher ausgebildeten Rastelementen 30 gelangen. Wie deutlich zu erkennen ist, sind nicht alle vorhanden Raststifte 29 im Eingriff mit den Rastelementen 30. Dies ist auch nicht erforderlich, um eine sichere, kraftschlüssige und unverdrehbare Kopplung des ersten und des zweiten Kupplungsteils zu erreichen. Dadurch das mehr Raststifte 29 vorhanden sind als in Eingriff gelangen können, kann sichergestellt werden, dass schon nach einem geringen Verdrehwinkel des ersten Kupplungsteils 220 gegenüber dem zweiten Kupplungsteils 240 ein erster Raststift 29 mit einem der Rastelemente 30 in Eingriff gelangt und daraufhin ein zweiter Raststift 29 in Eingriff mit einem der Rastelemente 30 gelangt. Somit kann ein schnelles Überführen der Kupplung aus dem geöffneten in den geschlossenen Zustand sichergestellt werden. In diesem dargestellten geschlossenen Zustand ist das mit dem ersten Kupplungsteil 220 drehfestverbunden nicht dargestellte Lenkrad und das mit dem zweiten Kupplungsteil 240 drehfestverbunden nicht dargestellte Lenkgetriebe wirkverbunden, so dass die Drehbewegung zwischen dem Lenkrad und dem Lenkgetriebe übertragen wird. Somit ist für eine Notsituation ein mechanischer Durchgriff zwischen dem Lenkrad und dem Lenkgetriebe gegeben.

In Figur 11 ist eine alternative Anordnung einer Steer-by-Wire-Lenkung dargestellt, wobei der Handmomentensteller 13 an der Lenksäule und der Stellantrieb 201 an dem Lenkgetriebe 9 angeordnet ist, während eine erfindungsgemäße Kupplung 100 im Bereich der Lenkwelle zwischen den beiden elektromechanischen Stellgliedern 13, 201 als separates Bauelement angeordnet ist. Dabei ist das erste Kupplungsteil mit der oberen Lenkwelle 4 und das zweite Kupplungsteil mit der unteren Lenkwelle 7 drehfest verbunden. Die untere Lenkwelle 7 ist mit dem Lenkritzel 8 gekoppelt, welches mit der Zahnstange 10 kämmt.

Ebenfalls ist es denkbar und möglich, die erfindungsgemäße Kupplung 100 direkt im Gehäuse des Lenkgetriebes anzuordnen, wobei das erste oder das zweite Kupplungsteil mit dem Lenkritzel 8 drehfest gekoppelt ist. Dadurch kann ein kompakter Aufbau realisiert werden.

## Patentansprüche

1. Kraftfahrzeuglenkung mit Steer-by-Wire-Funktion,
- mit einer oberen Lenkwelle (4), die in einer Lenksäule (1) gelagert und mit einem Lenkrad (3) drehfest verbindbar ist,
- mit einer unteren Lenkwelle (7), die mit einem Lenkgetriebe (9) zur Verschwenkung wenigstens eines lenkbaren Rades (12) verbunden ist, sowie
- mit einem mit der oberen Lenkwelle (4) verbundenen Handmomentensteller (13),
- mit einem mit der unteren Lenkwelle (7) verbundenen Stellantrieb (2) und
- mit einer Kupplung (100), die in geschlossenem Zustand das Lenkrad (3) und das Lenkgetriebe (9) drehfest miteinander koppelt, wobei der Stellantrieb (2) an der Lenksäule (1) angeordnet ist, **dadurch gekennzeichnet, dass** der Handmomentensteller (13) einen Elektromotor mit einer Abtriebswelle (21) und ein mit der Abtriebswelle (21) in Eingriff stehendes oberes Abtriebsrad (22) aufweist, welches mit der oberen Lenkwelle (4) drehfest verbunden ist, und dass der Stellantrieb (2) einen Elektromotor mit einer Abtriebswelle (20) und ein mit der Abtriebswelle (20) in Eingriff stehendes unteres Abtriebsrad (24) aufweist, welches mit der unteren Lenkwelle (7) drehfest verbunden ist.

2. Kraftfahrzeuglenkung nach Anspruch 1, **dadurch gekennzeichnet, dass** der Stellantrieb (2) einen Elektromotor aufweist, der seitlich an der Lenksäule (1) angeordnet ist.

3. Kraftfahrzeuglenkung nach Anspruch 1 oder 2, **dadurch gekennzeichnet, dass** die untere Lenkwelle (7) antriebsmäßig zwischen dem Stellantrieb (2) und dem Lenkgetriebe (9) angeordnet ist.

4. Kraftfahrzeuglenkung nach einem der vorhergehenden Ansprüche, **dadurch gekennzeichnet, dass** der Handmomentensteller (13) und der Stellantrieb (2) in einem gemeinsamen Getriebegehäuse (16) angeordnet sind.

5. Kraftfahrzeuglenkung nach Anspruch 1, **dadurch gekennzeichnet, dass** das obere Abtriebsrad (22) und das untere Abtriebsrad (24) koaxial zueinander drehbar in dem Getriebegehäuse (16) gelagert sind.

6. Kraftfahrzeuglenkung nach einem der vorhergehenden Ansprüche, **dadurch gekennzeichnet, dass** die Kupplung im Kraftfluss zwischen dem oberen Abtriebsrad (22) und dem unteren Abtriebsrad (24) angeordnet ist.

7. Kraftfahrzeuglenkung nach einem der vorhergehenden Ansprüche, **dadurch gekennzeichnet, dass** die Kupplung eine elektromagnetisch betätigbare Rastkupplung ist, die im stromlosen Zustand geschlossen ist.

8. Kraftfahrzeuglenkung nach einem der vorhergehenden Ansprüche, **dadurch gekennzeichnet, dass** die Kupplung einen Elektromagneten mit einem Stator (26) und einen mit einem Abtriebsrad (24) drehfest verbundenen Anker (27) aufweist, wobei der Anker (27) mittels eines Federelements (28) von dem Elektromagneten weg in die geschlossene Stellung der Kupplung vorgespannt ist, und dass der Anker (27) mit wenigstens einem Raststift (29) wirkverbunden ist, der in der geschlossenen Stellung mit einem mit dem anderen Abtriebsrad (22) drehfest verbundenen Rastelement (30) formschlüssig in Eingriff steht.

9. Kraftfahrzeuglenkung nach einem der vorhergehenden Ansprüche, **dadurch gekennzeichnet, dass** die Abtriebswellen (20, 21) als Schneckenwellen und die Abtriebsräder (22, 24) als Schneckenräder ausgebildet sind.

10. Kraftfahrzeuglenkung nach einem der vorangehenden Ansprüche, **dadurch gekennzeichnet, dass** die Kupplung (100)
- ein um eine Rotationsachse (111) drehbares erstes Kupplungsteil (220), und
- ein um die Rotationsachse (111) drehbares zweites Kupplungsteil (240), sowie
- zumindest zwei Raststifte (29), die in dem zweiten Kupplungsteil (240) aufgenommen sind und gegenüber diesem in Richtung der Rotationsachse verlagerbar sind, und
- zumindest zwei Rastelement (30), die in dem ersten Kupplungsteil (220) ausgebildet sind, wobei
- zumindest einer der Raststifte (29) und eines der Rastelemente (30) in einem geschlossenen Zustand miteinander in Eingriff stehen, wodurch das erste Kupplungsteil (220) und das zweite Kupplungsteil (240) drehfest miteinander gekoppelt sind, sowie
- einen Elektromagneten, umfassend einen Anker (27) und einen Stator (26), umfasst, wobei
- der Anker (27) mit den Raststiften (29) wirkverbunden ist, und
- der Anker (27) mittels des schaltbaren Stators (26) in Richtung der Rotationsachse (111) unter Mitnahme der Raststifte (29) gegen die Vorspannung eines Federelements (28) bewegbar ist,
- wodurch das Federelement (28) die Raststifte (29) in Richtung des geschlossenen Zustandes vorspannt,
**dadurch gekennzeichnet, dass**
die Rastelemente (30) als bogenförmige Langlöcher oder Langnuten ausgebildet sind.

## Claims

1. Motor vehicle steering system with steer-by-wire function,
- with an upper steering shaft (4), which is mounted in a steering column (1) and can be connected to a steering wheel (3) in a rotationally fixed manner,
- with a lower steering shaft (7), which is connected to a steering gear (9) for pivoting at least one steerable wheel (12), and
- with a manual torque adjuster (13) connected to the upper steering shaft (4),
- with an actuating drive (2) connected to the lower steering shaft (7) and
- with a coupling (100), which in the closed state couples the steering wheel (3) and the steering gear (9) to one another in a rotationally fixed manner, wherein the actuating drive (2) is arranged on the steering column (1), **characterized in that** the manual torque adjuster (13) comprises an electric motor with an output shaft (21) and an upper output wheel (22) that is in engagement with the output shaft (21), which is connected to the upper steering shaft (4) in a rotationally fixed manner, and **in that** the actuating drive (2) comprises an electric motor with an output shaft (20) and a lower output wheel (24) that is in engagement with the output shaft (20), which is connected to the lower steering shaft (7) in a rotationally fixed manner.

2. Motor vehicle steering system according to Claim 1, **characterized in that** the actuating drive (2) comprises an electric motor, which is arranged laterally on the steering column (1).

3. Motor vehicle steering system according to Claim 1 or 2, **characterized in that** the lower steering shaft (7) in terms of drive is arranged between the actuating drive (2) and the steering gear (9).

4. Motor vehicle steering system according to any one of the preceding claims, **characterized in that** the manual torque adjuster (13) and the actuating drive (2) are arranged in a common gear housing (16).

5. Motor vehicle steering system according to Claim 1, **characterized in that** the upper output wheel (22) and the lower output wheel (24) are mounted coaxially rotatable relative to one another in the gear housing (16).

6. Motor vehicle steering system according to any one of the preceding claims, **characterized in that** the coupling is arranged in the force flow between the upper output wheel (22) and the lower output wheel (24) .

7. Motor vehicle steering system according to any one of the preceding claims, **characterized in that** the coupling is an electromagnetically actuatable snap-on coupling, which is closed in the currentless state.

8. Motor vehicle steering system according to any one of the preceding claims, **characterized in that** the coupling comprises an electromagnet with a stator (26) and an armature (27) that is connected to an output wheel (24) in a rotationally fixed manner, wherein the armature (27) is preloaded by means of a spring element (28) away from the electromagnet into the closed position of the coupling, and **in that** the armature (27) is operationally connected to at least one engagement pin (29), which in the closed position is in positive engagement with an engagement element (30) that is connected to the other output wheel (22) in a rotationally fixed manner.

9. Motor vehicle steering system according to any one of the preceding claims, **characterized in that** the output shafts (20, 21) are designed as worm shafts and the output wheels (22, 24) as worm wheels.

10. Motor vehicle steering system according to any one of the preceding claims, **characterized in that** the coupling (100) comprises
- a first coupling part (220) that is rotatable about an axis of rotation (111), and
- a second coupling part (240) that is rotatable about the axis of rotation (111), and
- at least two engagement pins (29), which are received in the second coupling part (240) and are moveable relative to the same in the direction of the axis of rotation, and
- at least two engagement elements (30), which are formed in the first coupling part (220), wherein
- at least one of the engagement pins (29) and one of the engagement elements (30) in a closed state are in engagement with one another, by way of which the first coupling part (220) and the second coupling part (240) are coupled to one another in a rotationally fixed manner, and
- an electromagnet, comprising an armature (27) and a stator (26), wherein
- the armature (27) is operationally connected to the engagement pins (29), and
- the armature (27) can be moved by means of the switchable stator (26) in the direction of the axis of rotation (111) driving along the engagement pins (29) against the preload of a spring element (28),
- by way of which the spring element (28) preloads the engagement pins (29) in the direction of the closed state,
**characterized in that**
the engagement elements (30) are formed as arc-shaped elongated holes or elongated slots.

## Revendications

1. Système de direction de véhicule automobile à fonction « steer-by-wire », comprenant
- un arbre de direction supérieur (4) monté dans une colonne de direction (1) et pouvant être relié solidairement en rotation à un volant de direction (3),
- un arbre de direction inférieur (7) relié à un mécanisme de direction (9) pour faire pivoter au moins une roue directrice (12), ainsi que
- un régulateur de couple manuel (13) relié à l'arbre de direction supérieur (4),
- un actionneur (2) relié à l'arbre de direction inférieur (7), et
- un accouplement (100) qui accouple, à l'état fermé, le volant (3) et le mécanisme de direction (9) l'un à l'autre solidairement en rotation, l'actionneur (2) étant disposé au niveau de la colonne de direction (1), **caractérisé en ce que** le régulateur de couple manuel (13) comporte un moteur électrique pourvu d'un arbre de sortie (21) et une roue de sortie supérieure (22) qui est en engagement avec l'arbre de sortie (21) et qui est reliée solidairement en rotation à l'arbre de direction supérieur (4), et **en ce que** l'actionneur (2) comprend un moteur électrique pourvu d'un arbre de sortie (20) et une roue de sortie inférieure (24) qui est en engagement avec l'arbre de sortie (20) et qui est reliée solidairement en rotation à l'arbre de direction inférieur (7).

2. Système de direction de véhicule automobile selon la revendication 1, **caractérisé en ce que** l'actionneur (2) comporte un moteur électrique qui est disposé latéralement au niveau de la colonne de direction (1).

3. Système de direction de véhicule automobile selon la revendication 1 ou 2, **caractérisé en ce que** l'arbre de direction inférieur (7) est disposé en entraînement entre l'actionneur (2) et le mécanisme de direction (9) .

4. Système de direction de véhicule automobile selon l'une des revendications précédentes, **caractérisé en ce que** le régulateur de couple manuel (13) et l'actionneur (2) sont disposés dans un boîtier de transmission commun (16).

5. Système de direction pour véhicule automobile selon la revendication 1, **caractérisé en ce que** la roue de sortie supérieure (22) et la roue de sortie inférieure (24) sont montées coaxialement l'une à l'autre dans le boîtier de transmission (16).

6. Système de direction de véhicule automobile selon l'une des revendications précédentes, **caractérisé en ce que** l'accouplement est disposé dans le flux de puissance entre la roue de sortie supérieure (22) et la roue de sortie inférieure (24).

7. Système de direction de véhicule automobile selon l'une des revendications précédentes, **caractérisé en ce que** l'accouplement est un accouplement à encliquetage à commande électromagnétique qui est fermé à l'état non alimenté.

8. Système de direction de véhicule automobile selon l'une des revendications précédentes, **caractérisé en ce que** l'accouplement comprend un électroaimant pourvu d'un stator (26) et d'un induit (27) relié solidairement en rotation à une roue de sortie (24), l'induit (27) étant précontraint dans la position fermée de l'accouplement à distance de l'électroaimant au moyen d'un élément à ressort (28) et **en ce que** l'induit (27) est relié fonctionnellement à au moins une tige de verrouillage (29) qui est en engagement par complémentarité de formes, en position fermée, avec un élément de verrouillage (30) relié solidairement en rotation à l'autre roue d'entraînement (22).

9. Système de direction de véhicule automobile selon l'une des revendications précédentes, **caractérisé en ce que** les arbres de sortie (20, 21) sont réalisés sous la forme d'arbres à vis sans fin et les roues de sortie (22, 24) sont réalisées sous la forme de roues à vis sans fin.

10. Système de direction de véhicule automobile selon l'une des revendications précédentes, **caractérisé en ce que** l'accouplement (100) comprend
- un premier élément d'accouplement (220) pouvant tourner sur un axe de rotation (111), et
- un deuxième élément d'accouplement (240) pouvant tourner sur l'axe de rotation (111) et
- au moins deux tiges de verrouillage (29) qui sont reçues dans le deuxième élément d'accouplement (240) et qui peuvent être déplacées par rapport à ce dernier dans la direction de l'axe de rotation, et
- au moins deux éléments de verrouillage (30) qui sont formés dans le premier élément d'accouplement (220),
- au moins une des tige de verrouillage (29) et un des éléments de verrouillage (30) étant, dans un état fermé, en engagement l'un avec l'autre de sorte que le premier élément d'accouplement (220) et le deuxième élément d'accouplement (240) sont accouplés solidairement en rotation, ainsi que
- un électroaimant comprenant un induit (27) et un stator (26),
- l'induit (27) étant relié fonctionnellement aux tiges de verrouillage (29) et
- l'induit (27) pouvant être déplacé au moyen du stator commutable (26) en direction de l'axe de rotation (111) conjointement avec les tiges de verrouillage (29) en s'opposant à la précontrainte d'un élément à ressort (28)
- de sorte que l'élément à ressort (28) précontraint les tiges de verrouillage (29) en direction de l'état fermé,
**caractérisé en ce que**
les éléments de verrouillage (30) sont réalisés sous la forme de trous oblongs ou de longues rainures arquées.
